# EUROPÄISCHE PATENTSCHRIFT

(11) **EP 3 712 219 B1**
(45) Veröffentlichungstag und Bekanntmachung des Hinweises auf die Patenterteilung: **26.01.2022**
(21) Anmeldenummer: 19164495.4
(22) Anmeldetag: 22.03.2019
(51) Int. Cl.: C09D 5/18, C09K 21/12

(54) **BRANDSCHUTZZUSAMMENSETZUNG UND DEREN VERWENDUNG**
FLAME RETARDANT COMPOUND AND USE OF SAME
COMPOSITION IGNIFUGE ET SON UTILISATION

(43) Veröffentlichungstag der Anmeldung: 23.09.2020
(73) Patentinhaber: Hilti Aktiengesellschaft, 9494 Schaan (LI)
(72) Erfinder: Meier, Christoph, 63486 Bruchköbel (DE); Jochmann, Phillip, 89073 Ulm (DE)
(74) Vertreter: Hilti Aktiengesellschaft Corporate Intellectual Property

(56) Entgegenhaltungen:
- EP-A1- 0 333 514
- WO-A1-2013/150121
- WO-A1-2018/095361
- T. MARIAPPAN: "Recent developments of intumescent fire protection coatings for structural steel: A review", JOURNAL OF FIRE SCIENCES, Bd. 34, Nr. 2, 27. Januar 2016 (2016-01-27), Seiten 120-163, XP055352866, GB ISSN: 0734-9041, DOI: 10.1177/0734904115626720

## Beschreibung

Die vorliegende Erfindung betrifft eine Brandschutzzusammensetzung, insbesondere eine Brandschutzzusammensetzung mit intumeszierenden Eigenschaften, die ein Bindemittel auf Epoxid-Basis enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Brandschutzzusammensetzungen, auch dämmschichtbildende oder intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren verschiedene Systeme, wobei derzeit insbesondere intumeszierende Zusammensetzungen für Brandschutzbeschichtungen auf Epoxid-Basis oder auf Basis von Silan-modifizierten Polymeren im Markt erhältlich sind. Zusammensetzungen auf Epoxid-Basis sind beispielsweise aus der WO 2017/050762 A1, der WO 2016/170122 A1, der WO 2015/007628 A1, der WO 2014/095502 A1, der WO 2010/054984 A1, der O 2008/035976 A1 und der WO 1998/12270 A1 bekannt. Zusammensetzung auf Basis von MS-Polymeren sind beispielsweise aus der WO 2010/131037 A1 und der WO 2012/065716 A1 bekannt.

Die in der WO 2014/095502 A1 offenbarte Zusammensetzung auf Epoxid-Thiol-Basis, besitzt eine relativ hohe Expansionsrate, wodurch in einfacher und schneller Weise Beschichtungen mit der für die jeweilige Feuerwiderstandsdauer erforderlichen Schichtdicken aufgetragen werden können, wobei die Schichtdicke auf ein Minimum reduziert und dennoch eine große isolierende Wirkung erreicht werden kann. Nachteilig an diesen Zusammensetzungen ist, dass um die jeweilige Feuerwiderstandsdauer zu erreichen, ein hoher Feststoffanteil erforderlich ist, da meist mehr als 50 Gew.-% an Intumeszenzadditiven in der Zusammensetzung notwendig werden. Dieser hohe Feststoffanteil führt jedoch dazu, dass die Oberflächenrauigkeit der resultierenden ausgehärteten Beschichtung, insbesondere wenn die Zusammensetzung per Hand oder Sprühen appliziert wurde, mit steigendem Feststoffanteil zunimmt. Dementsprechend nimmt der Glanz der ausgehärteten Beschichtung ab. Die Kombination aus Oberflächenrauigkeit und Glanz wird im Folgenden auch zusammengefasst als Oberflächeneigenschaft bezeichnet. Eine niedrige Oberflächenrauigkeit und ein hoher Glanz entsprechen demnach einer sehr guten Oberflächeneigenschaft.

WO2013/150121, EP0333514, WO2018/095361 und T. MARIAPPAN: "Recent developments of intumescent fire protection coatings for structural steel: A review", JOURNAL OF FIRE SCIENCES, Bd. 34, Nr. 2, (2016-01-27), Seiten 120-163 offenbaren Organopolysiloxan und Epoxidharz enthaltende intumeszierende Brandschutzzusammensetzungen.

Die Anforderungen an eine gute Oberflächeneigenschaft von funktionalen Beschichtungen, wie beispielsweise intumeszierenden Beschichtungen, ist jedoch heutzutage in vielen Anwendungsbereichen gewünscht, vor allem in öffentlich zugänglichen Einrichtungen, wie Sportstadien, Wolkenkratzern, Flughäfen, Bahnhöfen, Verwaltungsgebäuden, und dergleichen.

Es besteht Bedarf an einer Zusammensetzung, die trotz eines hohen Feststoffanteils von mehr als 50 Gew.-% bezogen auf das Gesamtgewicht der Zusammensetzung, eine gute Verarbeitbarkeit und nach der Härtung eine sehr gute Oberflächeneigenschaft aufweist und daher insbesondere in Gebäudebereichen angewendet werden kann, in denen die beschichteten Bauteile gut sichtbar sind.

Der Erfindung liegt daher die Aufgabe zugrunde, eine Zusammensetzung mit hohem Feststoffanteil von mindestens 50 Gew.-% für intumeszierende Beschichtungen auf Epoxid-Basis bereitzustellen, die eine gute Verarbeitbarkeit, insbesondere beim Auftragen der Zusammensetzung durch Sprühen, aufweist.

Der Erfindung liegt daher die weitere Aufgabe zugrunde, eine Zusammensetzung mit hohem Feststoffanteil von mindestens 50 Gew.-% für intumeszierende Beschichtungen auf Epoxid-Basis bereitzustellen, die zu einer Beschichtung mit sehr guter Oberflächeneigenschaft, d.h. sehr geringer Oberflächenrauigkeit und sehr hoher Glanz, aushärtet.

Diese Aufgabe wird durch eine Zusammensetzung nach Anspruch 1 sowie die Verwendung nach Anspruch 8 und 9 gelöst. Bevorzugte Ausführungsformen sind den Unteransprüchen zu entnehmen.

Gegenstand der Erfindung ist demnach eine Brandschutzzusammensetzung für intumeszierende Beschichtungen, wobei die Brandschutzzusammensetzung ein Epoxidharz, ein Härtungsmittel für das Epoxidharz, einen Dehydrierungskatalysator und bis zu 0,2 Gew.-%, bezogen auf das Gewicht des Epoxidharzes und des Härtungsmittels, eines Verlaufsadditivs auf Basis eines Organopolysiloxans umfasst.

Verlaufsadditive können die Oberflächenbeschaffenheit von ausgehärteten Beschichtungen positiv beeinflussen. Die Erfinder haben aber herausgefunden, dass sich die Verlaufsadditive negativ auf die Brandschutzeigenschaften der ausgehärteten Zusammensetzungen auswirken können, so dass durch die Verwendung von Verlaufsadditiven zwar eine gute Oberflächeneigenschaft der Beschichtung erreichen lässt, aber die isolierenden Eigenschaften der Beschichtung im Brandfall negativ beeinflusst werden.

Überraschend hat sich gezeigt, dass bei Verwendung von bestimmten Verlaufsadditiven, nämlich organisch modifizierte Polysiloxane, auch Organopolysiloxane genannt, sowohl eine gute Oberflächeneigenschaft der ausgehärteten Beschichtung als auch gute Brandschutzeigenschaften im Brandfall erreicht werden können.

Durch die erfindungsgemäße Verwendung der Organopolysiloxane können Zusammensetzungen bereitgestellt werden, die aufgrund ihrer niedrigen Viskosität einfach zu verarbeiten ist, d.h. durch die unterschiedlichsten Methoden leicht auf Bauteile aufzutragen aber standfest ist, und durch die nach deren Aushärtung intumeszierende Beschichtung mit einer geringen Oberflächenrauigkeit und damit hohem Glanz erhalten werden können.

Zum besseren Verständnis der Erfindung werden die folgenden Erläuterungen der hierin verwendeten Terminologie als sinnvoll erachtet. Im Sinne der Erfindung:
- bedeutet "*Gerüst*" des Epoxidharzes oder der Thiol-funktionalisierten Verbindung der jeweils andere Teil des Moleküls, an das die funktionelle Epoxid- oder Thiolgruppe angebunden sein kann;
- bedeutet "*chemische Intumeszenz*" die Bildung einer voluminösen, isolierenden Ascheschicht durch aufeinander abgestimmte Verbindungen, die bei Hitzeeinwirkung miteinander reagieren;
- bedeutet "*physikalische Intumeszenz*" die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- bedeutet "*dämmschichtbildend*", dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;
- ist ein "*Kohlenstofflieferant*" eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;
- ist ein "*Dehydrierungskatalysator*" eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff "*Dehydrierungskatalysator*" verwendet;
- ist ein "*Treibmittel*" eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz); dieser Begriff wird gleichbedeutend mit "*Gasbildner*" verwendet;
- ist ein "*Aschekrustenstabilisator*" eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.
- ist ein "*Oligomer*" ein Molekül mit 2 bis 5 Wiederholungseinheiten und ist ein "*Polymer*" ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.
- bedeutet "*Epoxidäquivalentmasse*" diejenige Menge an Epoxidharz in [g], die ein Äquivalent [Val] Epoxidfunktionen besitzt und berechnet sich aus der Molmasse M in [g/Mol] dividiert durch die Funktionalität *f* in [Val/Mol]; (EEW [g/Val]).

Erfindungsgemäß wird als Verlaufsadditiv ein Organopolysiloxan eingesetzt. Beispiele der Organopolysiloxane umfassen, sind aber nicht darauf beschränkt, seitenketten-modifizierte Polymethylsiloxane, ein- oder zweifach endständig modifizierte Polymethylsiloxane und sowohl seitenketten-modifzierte als auch endständig modifizierte Polymethylsiloxane, wie auch Siloxancopolymere. Als Organopolysiloxane eigenen sich insbesondere Alkyl- und Polyether-modifizierte Polysiloxane. Diese können alleine oder als Kombination von zwei oder mehreren davon verwendet werden.

In einer Ausführungsform ist das Organopolysiloxan ein alkyl-modifiziertes Polysiloxan, insbesondere ein Polyalkylsiloxan.

Geeignete Polyalkylsiloxane sind Polydialkylsiloxane, insbesondere Polyalkylmethylsiloxane der folgenden Formel (I) 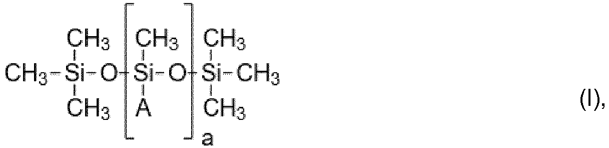 worin A einen linearen oder verzweigten Alkylrest, der gegebenenfalls substituiert sein kann, ist und a einen Wert von 3 bis zu 30.000 annehmen kann.

Der Alkylrest ist bevorzugt ein Alkylrest der folgenden Formel (1) 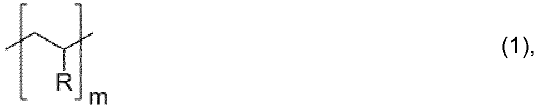 worin m eine Zahl zwischen 1 und 100 ist; R Wasserstoff oder ein linearer oder verzweigter Alkylrest der Formel (2) ist 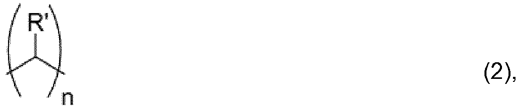 worin n eine Zahl zwischen 1 und 20 ist und R' eine lineare oder verzweigte C₁-C₆-Alkylgruppe ist.

Der einfachste Vertreter des Polydialkylsiloxans ist ein Polydimethylsiloxan der folgenden Formel (II) 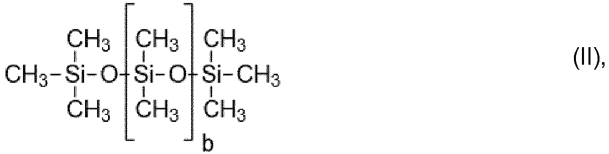 worin b einen Wert von 3 bis zu 30.000 annehmen kann.

In einer weiteren Ausführungsform ist das Organopolysiloxan ein Copolymer, insbesondere ein Blockpolymer, welches einen Polydimethylsiloxanblock und einen davon unterschiedlichen Polydialkylsiloxanblock, bei dem die Alkylgruppen gleich oder unterschiedlich sein können, umfasst.

Geeignete Blockpolymere sind Organopolyalkylsiloxane der folgenden Formel (III) 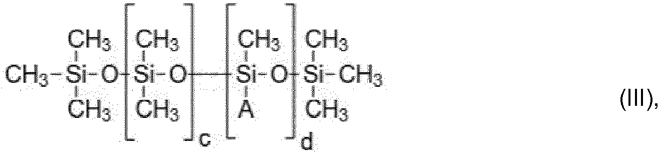 worin A dieselbe Bedeutung wie der Rest A in obiger Formel (I) hat. c und d geben jeweils einen durchschnittlichen Polymerisationsgrad an, wobei c und d zusammen (c + d) eine Zahl zwischen 3 und 30.000 ergeben.

In einer weiteren Ausführungsform ist das Organopolysiloxan ein Polyether-modifiziertes Polysiloxan.

Geeignete Polyether-modifizierte Polyalkylsiloxane sind Polyether-modifizierte Polymethylsiloxane der folgenden Formel (IV) 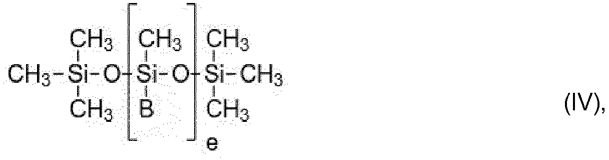 worin B R¹-(C₂H₄O)ₓ(C₃H₆O)_{y}-R² darstellt, worin
R¹ eine Einzelbindung oder eine Alkylengruppe ist,
R² ein Wasserstoffatom oder eine Alkylgruppe ist e, x und y jeweils einen durchschnittlichen Polymerisationsgrad angeben, einschließlich des Falls, in dem entweder x oder y 0 ist, und wobei e eine Zahl zwischen 3 und 30.000 ist.

In einer Ausführungsform ist B beispielsweise unter folgenden Gruppen ausgewählt 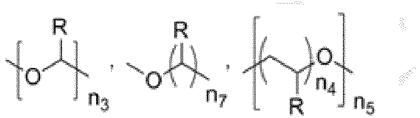 worin
n₃ eine Zahl zwischen 1 und 100,
n₅ eine Zahl zwischen 1 und 100,
n₄ und n₇ jeweils eine Zahl zwischen 1 und 10 ist;
R Wasserstoff oder ein linearer oder verzweigter Alkylrest der Formel 2 ist 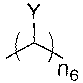 worin
n₆ eine Zahl zwischen 1 und 20 ist und
Y eine lineare oder verzweigte C₁-C₆-Alkylgruppe ist.

Geeignete Polyether-modifizierten Polysiloxane umfassen auch Copolymere mit einer oder mehreren Polyalkylenoxid-Einheit(en) in den Seitenketten, insbesondere Blockpolymere, welche einen Polydimethylsiloxanblock und einen oder mehrere davon unterschiedliche Polyalkylpolyethersiloxanblöcke, bei dem die Alkylgruppen gleich oder unterschiedlich sein können, umfasst. Ein Polyether-modifiziertes Polysiloxan, welches verwendet werden kann, hat folgende Formel (V) 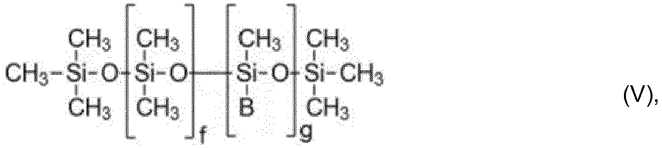 worin B dieselbe Bedeutung wie der Rest B in obiger Formel (VI) hat. f und g geben jeweils einen durchschnittlichen Polymerisationsgrad an, wobei f und g zusammen (f + g) eine Zahl zwischen 3 und 30.000 ergeben.

Auch Blockpolymere der folgenden Formel (VI) können verwendet werden: 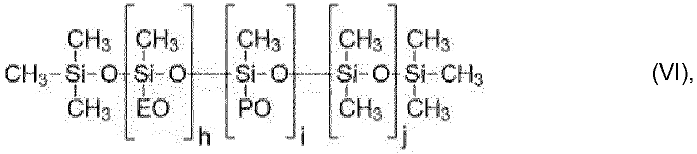 worin h, i und j jeweils einen durchschnittlichen Polymerisationsgrad angeben, wobei h, i und j zusammen (h + i + j) eine Zahl zwischen 3 und 30.000 ergeben; und EO Ethylenoxid und PO Propylenoxid bedeuten.

In einer weiteren Ausführungsform hat das Alkyl- oder Polyether-modifizierte Organopolysiloxan die folgende Formel (VII) 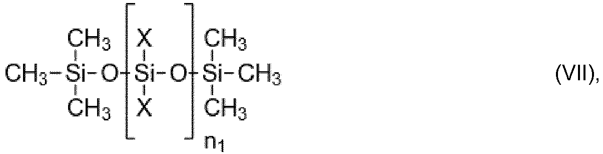 worin
n₁ eine Zahl zwischen 3 und 30.000 ist;
X jeweils, unabhängig voneinander, unter den folgenden Gruppen ausgewählt ist: 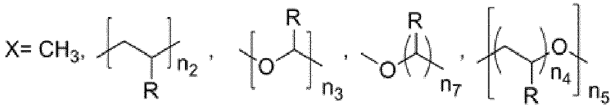 worin
n₂, n₃ und n₅ jeweils unabhängig voneinander eine Zahl zwischen 1 und 100 ist,
n₄ und n7 jeweils eine Zahl zwischen 1 und 10 ist;
R Wasserstoff oder ein linearer oder verzweigter Alkylrest der Formel 2 ist 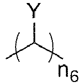 worin
n₆ eine Zahl zwischen 1 und 20 ist und
Y eine lineare oder verzweigte C₁-C₆-Alkylgruppe ist.

Als Epoxidharz sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A;
b) Reaktionsprodukte von Epichlorhydrin mit Bisphenol S
c) Epoxy-Novolake auf Phenol- oder Cresolbasis;
d) Aromatische Glycidylaminharze;
e) Epoxidharze ohne aromatische Struktureinheiten;

sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxynaphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol Amit einem EEW ≤ 330 g/Val; Reaktionsprodukte von Epichlorhydrin mit Bisphenol F, dem einfachsten Vertreter der Novolake, mit einem EEW ≤ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/Val, wie beispielsweise Epilox^{®} A 17-01, Epilox^{®} A 18-00, Epilox^{®} A 19-00, Epilox^{®} A 19-02, Epilox^{®} A 19-03 oder Epilox^{®} A 19-04 der Leuna-Harze GmbH, dargestellt durch die nachfolgende Formel, worin 0 ≤ n ≤ 0,2;

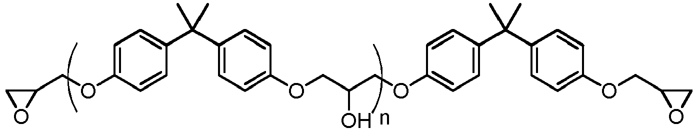

Reaktionsprodukte von Epichlorhydrin mit Bisphenol F, dem einfachsten Vertreter der Novolake, mit einem EEW ≤ 185 g/Val, wie beispielsweise Epilox^{®} F 16-01 oder Epilox^{®} F 17-00 der Leuna-Harze GmbH, dargestellt durch die nachfolgende Formel, worin 0 ≤ n ≤ 0,2; 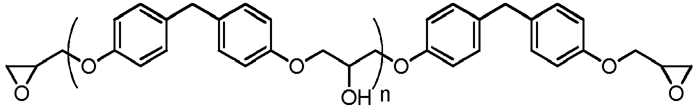 sowie Gemische zweier oder mehrerer derartiger Epoxidharze in beliebigem Verhältnis und in beliebigen Reinheitsgraden, wie beispielsweise Epilox^{®} AF 18-30, Epilox^{®} 18-50 oder Epilox^{®} T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Je nach Funktionalität des Epoxidharzes können der Vernetzungsgrad des Bindemittels und somit zum einen die Festigkeit der entstehenden Beschichtung, als auch deren elastische Eigenschaften eingestellt werden. Gleichzeitig hat dieses einen direkten Einfluss auf die erzielbare Expansion der entstehenden Aschekruste im Brandfall.

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether (C₁₂-C₁₄), Tridecylglycidylether, Phenylglycidylether (PGE), *o*-Kresolglycidylether (CGE), *p*-*tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

In einer Ausführungsform der Erfindung umfasst die intumeszierende Zusammensetzung ein Härtungsmittel für das Epoxidharz.

Zweckmäßig kann als Härtungsmittel jede Verbindung, bevorzugt Amin- oder Thiol-funktionalisierte Verbindung, verwendet werden, die mit Epoxidverbindungen reagieren können.

Zweckmäßig kann als Thiol-funktionalisierte Verbindung jede Verbindung verwendet werden, welche über mindestens zwei Thiolgruppen verfügt. Jede Thiolgruppe ist dabei entweder direkt oder über einen Linker an ein Gerüst angebunden.

Die Thiol-funktionalisierte Verbindung der vorliegenden Erfindung kann über irgendeines einer breiten Vielzahl von Gerüsten verfügen, wobei diese gleich oder unterschiedlich sein können.

Erfindungsgemäß ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (Mw) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).
1: Bindung zur funktionellen Gruppe
2: Bindung zum Gerüst

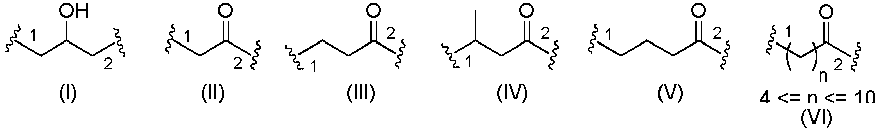

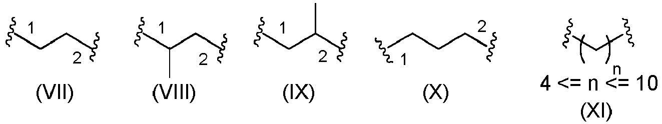

Als Linker für Thiol-funktionalisierte Verbindungen besonders bevorzugt sind die Strukturen (I), (II), (III) und (IV).

Besonders bevorzugte Thiol-funktionalisierte Verbindungen sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden. In dieser Hinsicht wird Bezug genommen auf die WO 99/51663 A1, Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythhtol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Je nach Funktionalität der Thiol-funktionalisierten Verbindung können der Vernetzungsgrad des Bindemittels und somit zum einen die Festigkeit der entstehenden Beschichtung, als auch deren elastische Eigenschaften eingestellt werden. Gleichzeitig hat dieses einen direkten Einfluss auf die erzielbare Expansion der entstehenden Aschekruste im Brandfall.

In der Zusammensetzung der vorliegenden Erfindung kann der relative Anteil an Epoxidharzen zu Thiol-funktionalisierten Verbindungen durch das reaktive Äquivalentverhältnis, welches das Verhältnis der Anzahl aller Epoxidgruppen in der Zusammensetzung zu der Anzahl an Thiolgruppen in der Zusammensetzung ist, charakterisiert werden. Das reaktive Äquivalentverhältnis beträgt 0,1 bis 10:1, bevorzugt 0,2 bis 5:1, stärker bevorzugt 0,3 bis 3:1, noch stärker bevorzugt 0,5 bis 2:1 und noch stärker bevorzugt 0,75 bis 1,25:1.

Als alternative oder zusätzliche Härterkomponente, die auch als Co-Härtungsmittel bezeichnet wird, kann ein für Epoxidharze üblicher Aminhärter verwendet werden.

Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind Ethylendiamin, Propylendiamin, Hexamethylendiamin, Diethylentriamin (DETA), Tetraethylentetramin (TETA), Isophorondiamin (IPDA), *m*-Xylylendiamin (mXDA), N-Methylbenzylamin (NMB) oder die Ancamide^{®} (Air Products), Diethylaminopropylamin (DEAPA), *N*-Aminoethylpiperazin (N-AEP), Diaminodiphenylsulfon (DDS), 1,8-Diamino-p-menthan (MDA). Ebenso können Polyetheramine wie Jeffamine^{®} D-230 (Huntsman), Jeffamine^{®} D-400 (Huntsman), Jeffamine^{®} T-403 (Huntsman) verwendet werden.

Über ein entsprechend gewähltes Gemisch aus Thiol-funktionalisierter Verbindung und Amin-funktionalisierter Verbindung als Härter für das Epoxidharz können die Beschichtungseigenschaften eingestellt werden.

In einer bevorzugten Ausführungsform der Erfindung ist das Härtungsmittel eine Thiol-funktionalisierte Verbindung.

In einer weiteren Ausführungsform der Erfindung ist das Härtungsmittel eine Kombination aus einer Thiol-funktionalisierten Verbindung und einer Amin-funktionalisierten Verbindung.

Wenn die Härtung, d.h. die Reaktion des Epoxidharzes mit der Amin-funktionalisierten oder der Thiol-funktionalisierten Verbindung, zu langsam erfolgt, kann ein Katalysator für die Härtung verwendet werden. Durch die Verwendung eines Katalysators kann sichergestellt werden, dass die Zusammensetzungen schnell, d.h. innerhalb von wenigen Minuten, und vollständig auch bei Raumtemperatur aushärten. Dies macht solche Zusammensetzungen sehr attraktiv für die Anwendung vor Ort, etwa auf der Baustelle.

Als Katalysatoren können die üblicherweise für Reaktionen zwischen Epoxidharzen und Amin-funktionalisierten oder Thiol-funktionalisierten Verbindungen verwendeten Verbindungen, wie tertiäre Amine, z.B. Benzyldimethylamin, N,N-Dimethylpropylamin, 1,8-Diazabicyclo[5.4.0]undec-7-en und Bis-N,N-Dimethylethanolaminether, Phenol-Derivate, z.B. Nonylphenol, und dergleichen, die dem Fachmann bekannt sind, verwendet werden. In dieser Hinsicht wird Bezug genommen auf die WO 2012/08224 A1, deren Inhalt hiermit in diese Anmeldung aufgenommen wird.

In einer bevorzugten Ausführungsform der Erfindung enthält der Bestandteil B ferner ein Aminophenol oder einen Ether davon, der mindestens eine tertiäre Aminogruppe gegebenenfalls zusammen mit einer primären und/oder sekundären Aminogruppe aufweist, als Katalysator. Der Katalysator ist bevorzugt unter Verbindungen der allgemeinen Formel (X) ausgewählt, 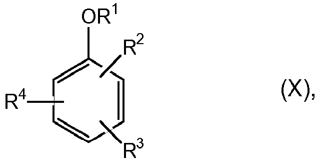 in der R¹ Wasserstoff oder ein linearer oder verzweigter C₁-C₁₅-Alkylrest ist, R² (CH₂)ₙNR⁵R⁶- oder NH(CH₂)ₙNR⁵R⁶- ist, in denen R⁵ und R⁶ unabhängig voneinander ein linearer oder verzweigter C₁-C₁₅-Alkylrest sind und n = 0 oder 1 ist, R³ und R⁴ unabhängig voneinander Wasserstoff, (CH₂)ₙNR⁷R⁸ oder NH(CH₂)ₙNR⁷R⁸ sind, R⁷ und R⁸ unabhängig voneinander Wasserstoff oder ein linearer oder verzweigter C₁-C₁₅-Alkylrest sind und n = 0 oder 1 ist.

R¹ ist bevorzugt Wasserstoff oder ein C₁-C₁₅-Alkylrest, insbesondere ein linearer C₁-C₁₅-Alkylrest, stärker bevorzugt Methyl oder Ethyl und am stärksten bevorzugt Methyl.

Bevorzugt ist das Phenol der Formel (X) in 2-, 4- und 6-Position substituiert, d.h. die Substituenten R², R³ und R⁴ sitzen in 2-, 4- und 6-Position.

Für den Fall, dass R⁵, R⁶, R⁷ und R⁸ Alkylreste sind, sind diese bevorzugt ein C₁-C₅-Alkylrest, stärker bevorzugt Methyl oder Ethyl und am stärksten bevorzugt Methyl.

Als Katalysator kann entweder eine Verbindung oder ein Gemisch von mindestens zwei Verbindungen der Formel (X) eingesetzt werden.

Bevorzugt ist der Katalysator unter 2,4,6-Tris(dimethylaminomethyl)phenol, Bis(dimethylaminomethyl)phenol und 2,4,6-Tris(dimethylamino)phenol ausgewählt. Am stärksten bevorzugt ist der Katalysator 2,4,6-Tris(dimethylaminomethyl)phenol.

Ein bevorzugtes Katalysatorgemisch enthält 2,4,6-Tris(dimethlaminomethyl)phenol und Bis(dimethylaminomethyl)phenol. Solche Gemische sind z.B. kommerziell erhältlich als Ancamine^{®} K-54 (AirProducts, Belgien).

Damit die Zusammensetzung das Bauteil, auch das sie aufgebracht wurde, vor Feuer oder gegen große Hitzeeinwirkung etwa in Folge eines Brandes schützen kann, ist es erforderlich, dass die Zusammensetzung nach der Aushärtung durch den Temperatureintrag eine isolierende Schicht bildet.

Zweckmäßig werden hierzu Verbindungen, auch dämmschichtbildende oder intumeszierende Additive genannt, eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator (auch Säurebildner genannt) und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

Es sei erwähnt, dass bei der erdingunsgemäßen Brandschutzzusammensetzung das Bindemittel, d.h. das Reaktionsprodukt aus dem Epoxidharz und dem Härtungsmittel, im Brandfall selbst auch die Funktion des Kohlenstofflieferanten und/oder Treibmittels hat, so dass es nicht zwingend erforderlich ist, weitere Verbindungen hinzugeben, die diese Funktion erfüllen. Es sind somit alle drei für die Intumeszenz notwendigen Verbindungen vorhanden.

Erfindungsgemäß enthält die Zusammensetzung daher zumindest einen Dehydrierungskatalysator.

Als Dehydrierungskatalysatoren bzw. Säurebildner kommen die in intumeszierenden Brandschutzformulierungen üblicherweise verwendeten und dem Fachmann bekannten Verbindungen in Betracht, insbesondere ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

In einer Ausführungsform der Erfindung kann die Zusammensetzung als zusätzliches dämmschichtbildendes Additiv einen weiteren Kohlenstofflieferanten enthalten.

Als weiterer Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

In einer weiteren Ausführungsform der Erfindung kann die Zusammensetzung als zusätzliches dämmschichtbildendes Additiv ein weiteres Treibmittel enthalten.

Als weiteres Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Dehydrierungskatalysator als auch als Treibmittel wirkt. Weitere Beispiele sind in der GB 2 007 689 A1, EP 139 401 A1 und US-3 969 291 A1 beschrieben.

In einer weiteren Ausführungsform der Erfindung kann die Zusammensetzung ferner eine thermisch expandierbare Verbindung, wie eine Graphit-Interkallationsverbindung, die auch als Blähgraphit bekannt sind, enthalten. Diese können ebenfalls ins Bindemitteleingebunden werden.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Das Epoxidharz ist bevorzugt in einer in einer Menge von 3 bis 95 Gew.-%, besonders bevorzugt in einer Menge von 5 bis 80 Gew.-% in der Zusammensetzung enthalten.

Wird ein Reaktivverdünner verwendet, so ist dieser in einer Menge von 0,25 bis 70 Gew.-%, bevorzugt in einer Menge von 0,5 bis 50 Gew.-% in der Zusammensetzung enthalten.

Die Amin-funktionalisierte bzw. die Thiol-funktionalisierte Verbindung ist bevorzugt in einer Menge von 5 bis 97 Gew.-%, besonders bevorzugt in einer Menge von 5 bis 95 Gew.-% in der Zusammensetzung enthalten. Wird eine Mischung aus der Amin-funktionalisierten und der Thiol-funktionalisierten Verbindung verwendet, so beziehen sich die eben genannten Mengen auf die Mischung.

Die dämmschichtbildenden Additive können in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil in der Zusammensetzung so hoch wie möglich eingestellt. Bevorzugt beträgt der Anteil in der Zusammensetzung 35 bis 85 Gew.-% und besonders bevorzugt 40 bis 85 Gew.-%.

Die Zusammensetzung kann als Paste mit einem Pinsel, einer Rolle oder durch Sprühen auf das Substrat, insbesondere metallische Substrat aufgebracht werden. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine hohe mechanische Beständigkeit aus.

Die erfindungsgemäße Zusammensetzung ist besonders als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung von metallischen und/oder nicht metallischen Substraten, ganz besonders für Konstruktionselemente oder Bauelemente aus Stahl, Beton, Holz und anderen Materialien, wie etwa Kunststoffen, insbesondere als Brandschutzbeschichtung.

Die folgenden Beispiele dienen der weiteren Erläuterung der Erfindung.

### AUSFÜHRUNGSBEISPIELE

Für die Herstellung von erfindungsgemäßen Zusammensetzungen werden Formulierungen mit den in Tabelle 1 angegeben Einzelkomponenten und mit den in Tabelle 2 angegebenen Verlaufsadditiven mit einem Dissolver vermengt und homogenisiert.

Zur Herstellung der erfindungsgemäßen Formulierungen sowie der Vergleichsformulierungen wurden folgende Bestandteile verwendet:

| **Bestandteil** | **Beschreibung** | **Hersteller** |
|---|---|---|
| CeTePox^{®} 2200 H | Mercaptanterminiertes Polymer | CTP Chemicals and Technologies for Polymers GmbH |
| 1,3-BAC | 1,3-Bis(aminomethyl)cyclohexan | Itochu Deutschland GmbH |
| PUR 812 | 1,4-Diazabicyclooctan, 25-50%ige Lösung | Rühl Puromer GmbH |
| Byk 9076 | Alkylammoniumsalz eines hochmolekularen Copolymeren | BYK-Chemie GmbH |
| Dysperbyk-2152 | Hochverzweigter Polyester | BYK-Chemie GmbH |
| Coatforce CF 30 | Künstlich hergestellte ungerichtete glasartige (Silikat-)Fasern mit einem Anteil an Alkali- und Erdalkalimetalloxiden (Na2O+K2O+CaO+MgO+BaO) von mehr als 18 Gew.- %] | ROCKWOOL B.V. t.a. LAPINUS FIBRES |
| Polwhite E | Kaolin | Imerys Minerals Ltd |
| Kronos 2056 | Titandioxid | Kronos International, Inc. |
| Epilox F 17-00 | Epoxidharz auf der Basis von Bisphenol F | LEUNA-Harze GmbH |
| Araldite DY-026 | 1,4-Butandioldiglycidylether | Huntsman Advanced Materials (Europe) BVBA |
| Dynasylan GLYMO | [3-(2,3-Epoxypropoxy) propyl]trimethoxysilan | Evonik Resource Efficiency GmbH |
| Tri-iso-butylphosphat | Tri-iso-butylphosphat | LANXESS Deutschland GmbH |
| BYK-W 9010 | Copolymer mit sauren Gruppen | BYK-Chemie GmbH |
| SFC 0,20 MFC | Carbon-Faserfüllstoff | STW Schwarzwälder Textil-Wer |
| Melafine | Melamin | OCI Nitrogen |
| Cab-O-Sil^{®} TS-720 | mit Polydimethylsiloxan oberflächenbehandelte pyrogene Kieselsäure | Cabot Corporation |
| Exolit AP 462 | Ammoniumpolyphosphat | Clariant SE |

Die Messung der dynamischen Viskosität aller Mischungen erfolgte mit Hilfe eines Rheometers (Malvern Kinexus Ultra+) unter Einsatz eines Platte-Platte Messsystems nach DIN 53019. Der Durchmesser der Platte betrug 20 mm und der Spaltabstand betrug 0,3 mm. Es wurde folgende Methode angewendet: Es wurde bei 40 °C in einem ersten Abschnitt in 12 mal 15 Sekunden bei 0,1/s geschert und in einem zweiten Abschnitt bei 40 °C in 6 Stufen zu je 11 Sekunden logarithmisch die Schergeschwindigkeit von 0,1/s auf 10/s gesteigert. In einem dritten Abschnitt wurde die bei 40 °C in 5 Stufen zu je 8 Sekunden logarithmisch die Schergeschwindigkeit von 21,54/s auf 464,2/s gesteigert und in einem letzten Abschnitt wurde bei 40 °C 17 mal 10 Sekunden bei 0,1/s geschert. Die abgebildeten Viskositätswerte entsprechen dem Mittelwert der im ersten Abschnitt (bei 0,1/s) gemessenen Werte bzw. dem im dritten Abschnitt (bei 215/s) gemessenen Wert.

Für Brandtests wurden Proben hergestellt, in dem eine Stahlplatte (280 mm x 280 mm x 5 mm) mit der jeweiligen Formulierung beschichtet wurde. Die Schichtdicke der aufgetragenen Formulierungen betrug 7 mm. Nach Aufbringen wurden die aufgebrachte Schicht mindestens 10 Tage bei 22 °C gelagert, bevor der Brandtest durchgeführt wurde. Die Rückseite der Stahlplatten war mit jeweils drei Thermoelementen versehen, welche die Temperatur auf der dem Feuer abgewandten Seite aufzeichneten und über welche das arithmetische Mittel gebildet wurde. Die Proben wurden einem Brandtest unterworfen, indem sie in die Wand eines Ofens eingebaut wurden, welcher von innen befeuert wurde. Die Heizrate des Ofens entsprach der in ISO 834 beschriebenen Rate. Die Zeit, bis eine Temperatur von 300°C, bzw. 500°C auf der rückseitigen Stahloberfläche erreicht wurde, entspricht dabei dem Wert TTF (300°C/7mm), respektive TTF (500°C/7mm) in Tabelle 3.

**Tabelle 1: Zusammensetzung der Vergleichsformulierungen V1 bis V5 und der Beispielformulierungen 1 bis 6**

| **Beispiel** | **V1** | **V2** | **V3** | **V4** | **V5** | **1** | **2** | **3** | **4** | **5** | **6** |
|---|---|---|---|---|---|---|---|---|---|---|---|
| CeTePox 2200 H | 147,62 g | 146,62 g | 137,09 g | 146,72 g | 136,97 g | 146,54 g | 18,39 g | 146,58 g | 146,53 g | 146,9 g | 137,00 g |
| 1,3-BAC | 15,43 g | 15,62 g | 14,39 g | 15,48 g | 14,38 g | 15,37 g | 1,92 g | 15,34 g | 15,82 g | 15,5 g | 14,39 g |
| PUR 812 | 1,59g | 3,11 g | 2,36 g | 2,62 g | 1,65g | 1,61 g | | 2,45 g | 2,49 g | 2,78 g | 1,58g |
| Byk 9076 | 6,47 g | 6,23 g | | | | 6,51 g | | 6,41 g | 6,48 g | 6,79 g | |
| Dysperbyk-2152 | | | 11,65 g | 6,36 g | 11,57 g | | 1,88 g | | | | 11,37 g |
| Coatforce CF 30 | 57,75 g | 57,64 g | 57,61 g | 57,72 g | 57,92 g | 57,68 g | 7,8 g | 57,65 g | 57,66 g | 57,72 g | 57,70 g |
| Polwhite E | 13,94 g | 13,63 g | 13,96 g | 13,78 g | 14,00 g | 13,87 g | 1,97 g | 13,89 g | 13,85 g | 13,85 g | 13,95 g |
| Kronos 2056 Titanium Oxide | 137,60 g | 137,78 g | 137,70 g | 137,75 g | 137,81 g | 137,61 g | 18,62 g | 137,74 g | 137,76 g | 137,61 g | 137,76 g |
| Epilox F 17-00 | 155,47 g | 154,78 g | 145,92 g | 154,98 g | 144,50 g | 154,77 g | 19,39 g | 154,62 g | 154,46 g | 154,81 g | 144,31 g |
| Araldite DY-026 | 8,79 g | 8,86 g | 8,59 g | 8,79 g | 8,28 g | 8,77 g | 1,06 g | 8,75 g | 8,72 g | 8,82 g | 8,18 g |
| Dynasylan GLYMO | 19,41 g | 19,56 g | 18,14 g | 21,56 g | 18,32 g | 19,46 g | 2,39 g | 19,99 g | 20,79 g | 19,39 g | 18,77 g |
| Tri-iso-butylphosphat | 69,55 g | 69,99 g | 69,60 g | 69,67 g | 69,53 g | 69,74 g | 9,36 g | 70,18 g | 69,81 g | 69,58 g | 69,54 g |
| BYK-W 9010 | 6,90 g | 6,87 g | 24,97 g | 6,95 g | 26,09 g | 6,88 g | 3,38 g | 6,92 g | 6,99 g | 6,95 g | 24,81 g |
| Carbon- Faserfüllstoff SFC 0,20 MFC | 11,60 g | 11,56 g | 11,58 g | 11,56 g | 11,59 g | 11,59 g | 1,56 g | 11,56 g | 11,6 g | 11,58 g | 11,56 g |
| Melafine | 82,88 g | 82,96 g | 82,62 g | 82,88 g | 82,87 g | 83,40 g | 49,77 g | 82,85 g | 82,79 g | 82,96 g | 82,94 g |
| Cab-O-Sil^{®} TS-720 | 11,59 g | 11,49 g | 11,32g | 11,43 g | 11,78 g | 11,84 g | 11,71 g | 11,46 g | 11,45 g | 11,6g | 11,54 g |
| Exolit AP 462 | 352,90 g | 352,87 g | 352,97 g | 352,86 g | 353,03 g | 353,00 g | 0,518 g | 352,53 g | 352,89 g | 352,68 g | 352,81 g |
| Verlaufsadditiv ¹⁾ siehe Tabelle 2 | ¹⁾ | ¹⁾ | ¹⁾ | ¹⁾ | ¹⁾ | ¹⁾ | ¹⁾ | ¹⁾ | ¹⁾ | ¹⁾ | ¹⁾ |

**Tabelle 2: Anteile an Verlaufsadditiv in den Vergleichsbeispiel- und Beispielsformulierungen aus Tabelle 1:**

| **Beispiel** | **Menge [g]** | **Verlaufsadditiv** | **Zusammensetzung** |
|---|---|---|---|
| V1 | - | - | |
| V2 | 2,19 | Disparlon L-1982N | fluoriertes Polyacrylat |
| V3 | 2,22 | Efka^{®} FL 3741 | Fluoriertes Polyacrylat |
| V4 | 2,33 | Efka^{®} FL 3745 | Fluoriertes Polyacrylat |
| V5 | 2,58 | Byk 361 N | Fluoriertes Polyacrylat |
| Beispiel 1 | 2,23 | Afcona^{®} 3239 | Organisch modifiziertes Polyalkyl Polysiloxan |
| Beispiel 2 | 0,30 | Afcona^{®} 3238 | Polyalkyl Polysiloxan |
| Beispiel 3 | 2,24 | Efka^{®} SL 3200 | Polysiloxan Copolymer |
| Beispiel 4 | 2,22 | Efka^{®} SL 3288 | Polysiloxan Copolymer |
| Beispiel 5 | 2,30 | Byk 378 | Polyethermodifiziertes Polysiloxan |
| Beispiel 6 | 2,19 | Afcona 3280 | Polysiloxan Copolymer |

**Tabelle 3: Ergebnisse der Viskositätsmessungen und der Brandtests**

| **Beispiel** | **Viskosität bei Scherrate 0,1 s⁻¹ [Pas]** | **Viskosität bei Scherrate 215 s⁻¹ [Pas]** | **TTF (300°C / 7mm) [min]** | **TTF (500°C / 7mm) [min]** |
|---|---|---|---|---|
| | | | | |
| V1 | 98,19 | 7,61 | 68,99 | 117,99 |
| V2 | 82,36 | 6,85 | 59,10 | 101,60 |
| V3 | 72,45 | 6,39 | 59,53 | 104,53 |
| V4 | 32,52 | 5,83 | 55,61 | 102,61 |
| V5 | 63,7 | 6,53 | 56,04 | 98,54 |
| | | | | |
| Beispiel 1 | 31,48 | 5,53 | 67,77 | 117,75 |
| Beispiel 2 | 74,9 | 6,48 | 71,85 | 119,85 |
| Beispiel 3 | 72,45 | 6,39 | 63,19 | 109,69 |
| Beispiel 4 | 160,2 | 6,2 | 62,47 | 106,97 |
| Beispiel 5 | 78,07 | 6,45 | 64,96 | 114,46 |
| Beispiel 6 | 79,18 | 6,58 | 65,95 | 107,45 |

Zur Messung der Oberflächenrauigkeit wurde einmal eine Formulierung ohne Verlaufsadditiv als Vergleich (V1) und einmal eine Formulierung mit einem Verlaufsadditiv (Beispiel 1) mit Hilfe eines Airless 2-Komponenten Sprühgerätes (Grako Airless XM 70 Plural-component sprayer, model XM3B00) auf eine Stahlplatte (280 mm 280 mm x 5 mm) appliziert und bei 22 °C für mindestens 10 Tage ausgehärtet. Die Dicke der Schicht betrug jeweils 1 mm - 1,5 mm. Die Messung erfolgte mit einem Weißlichtmikroskop Alicona Infinite Focus gemäß EN ISO 25178 mittels Fokusvariation. Tabelle 4 zeigt die Ergebnisse der Messungen.

**Tabelle 4: Ergebnisse der Messung der Oberflächenrauigkeit**

| **Beispiel** | **Grenzwellenlänge [µm]** | **Ra [µm]** | **Rq [µm]** | **Rz [µm]** |
|---|---|---|---|---|
| V1 | 8000 | 12,28 ± 8,29 | 17,64 ± 5,43 | 3,94 ± 0,63 |
| 1 | 8000 | 8,75 ± 5,54 | 13,78 ± 1,86 | 3,16 ± 0,36 |

| | | | | |
|---|---|---|---|---|
| Ra = Durchschnittliche Rauigkeit des Profils Rq = Durchschnittliche Quadratischer Mittelwert des Rauigkeitsprofils Rz = Durschnittliche "Gipfel-Tal-Unterschied" des Rauigkeitsprofils | | | | |

**Tabelle 5: Ergebnisse der Glanzmessung**

| **Beispiel** | **Glanz** | | |
|---|---|---|---|
| | **20°** | **60°** | **85°** |
| V1 (1.Messung) | 3,6 ± 0,1 | 24,2 ± 0,5 | 47,1 ± 3,1 |
| V1 (2.Messung) | 4,8 ± 0,7 | 28,9 ± 2,8 | 40,5 ± 2,0 |
| 1 (1.Messung) | 6,3 ± 0,4 | 36,1 ± 1,8 | 65,3 ± 2,4 |
| 1 (2.Messung) | 6,1 ± 0,3 | 34,4 ± 1,3 | 67,1 ± 1,4 |

## Patentansprüche

1. Brandschutzzusammensetzung umfassend ein Epoxidharz, ein Härtungsmittel für das Epoxidharz, einen Dehydrierungskatalysator und bis zu 0,2 Gew.-%, bezogen auf das Gewicht des Epoxidharzes und des Härtungsmittels, eines Organopolysiloxans.

2. Brandschutzzusammensetzung nach Anspruch 1, wobei das Organopolysiloxan ein Alkyl- oder Polyether-modifiziertes Polysiloxan ist.

3. Brandschutzzusammensetzung nach Anspruch 1 oder 2, wobei das Härtungsmittel eine Amino- oder eine Thiol-funktionalisierte Verbindung ist.

4. Brandschutzzusammensetzung Zusammensetzung nach einem der vorhergehenden Ansprüche, wobei die Brandschutzzusammensetzung ferner einen Katalysator für die Reaktion des Epoxidharzes mit dem Härtungsmittel enthält.

5. Brandschutzzusammensetzung nach einem der vorhergehenden Ansprüche, wobei der Dehydrierungskatalysator ein Salz oder ein Ester einer anorganischen, nicht flüchtigen Säure, ausgewählt unter Schwefelsäure, Phosphorsäure oder Borsäure, ist.

6. Brandschutzzusammensetzung nach einem der vorhergehenden Ansprüche, wobei die Brandschutzzusammensetzung ferner einen Kohlenstofflieferanten und/oder ein Treibmittel umfasst.

7. Brandschutzzusammensetzung nach Anspruch 6, wobei die Brandschutzzusammensetzung ferner mindestens einen Aschekrustenstabilisator enthält.

8. Verwendung eines Organopolysiloxans in Brandschutzzusammensetzungen auf Basis eines Epoxidharzes und eines Härtungsmittels mit einem Feststoffgehalt von 50 Gew.-% oder mehr zur Verringerung der Viskosität der Brandschutzzusammensetzung, wobei das Organopolysiloxan in einer Menge von bis zu 0,2 Gew.-%, bezogen auf das Gewicht des Epoxidharzes und des Härtungsmittels, in der Brandschutzzusammensetzung enthalten ist.

9. Verwendung eines Organopolysiloxans in Brandschutzzusammensetzungen auf Basis eines Epoxidharzes und eines Härtungsmittels mit einem Feststoffgehalt von 50 Gew.-% oder mehr zur Verbesserung der Oberflächenstruktur und des Glanzes der ausgehärteten Brandschutzzusammensetzung, wobei das Organopolysiloxan in einer Menge von bis zu 0,2 Gew.-%, bezogen auf das Gewicht des Epoxidharzes und des Härtungsmittels, in der Brandschutzzusammensetzung enthalten ist.

## Claims

1. Fire protection composition comprising an epoxy resin, a hardener for the epoxy resin, a dehydrogenation catalyst and up to 0.2 wt.%, based on the weight of the epoxy resin and the hardener, of an organopolysiloxane.

2. Fire protection composition according to claim 1, wherein the organopolysiloxane is an alkyl- or polyether-modified polysiloxane.

3. Fire protection composition according to either claim 1 or claim 2, wherein the hardener is an amino- or a thiol-functionalized compound.

4. Fire protection composition composition according to any of the preceding claims, wherein the fire protection composition further contains a catalyst for the reaction of the epoxy resin with the hardener.

5. Fire protection composition according to any of the preceding claims, wherein the dehydrogenation catalyst is a salt or an ester of an inorganic, non-volatile acid selected from sulfuric acid, phosphoric acid or boric acid.

6. Fire protection composition according to any of the preceding claims, wherein the fire protection composition further contains a carbon source and/or a blowing agent.

7. Fire protection composition according to claim 6, wherein the fire protection composition further contains at least one ash crust stabilizer.

8. Use of an organopolysiloxane in fire protection compositions based on an epoxy resin and a hardener having a solids content of 50 wt.% or more to reduce the viscosity of the fire protection composition, wherein the organopolysiloxane is contained in the fire protection composition in an amount of up to 0.2 wt.%, based on the weight of the epoxy resin and the hardener.

9. Use of an organopolysiloxane in fire protection compositions based on an epoxy resin and a hardener having a solids content of 50 wt.% or more to improve the surface structure and the gloss of the cured fire protection composition, wherein the organopolysiloxane is contained in the fire protection composition in an amount of up to 0.2 wt.%, based on the weight of the epoxy resin and the hardener.

## Revendications

1. Composition ignifuge comprenant une résine époxy, un agent de durcissement pour la résine époxy, un catalyseur de déshydrogénation et jusqu'à 0,2 % en poids, sur la base du poids de la résine époxy et de l'agent de durcissement, d'un organopolysiloxane.

2. Composition ignifuge selon la revendication 1, dans laquelle l'organopolysiloxane est un polysiloxane modifié par un alkyle ou un polyéther.

3. Composition ignifuge selon la revendication 1 ou 2, dans laquelle l'agent de durcissement est un composé à fonction amino ou thiol.

4. Composition ignifuge composition selon l'une des revendications précédentes, dans laquelle la composition ignifuge contient en outre un catalyseur pour la réaction de la résine époxy avec l'agent de durcissement.

5. Composition ignifuge selon l'une des revendications précédentes, dans laquelle le catalyseur de déshydrogénation est un sel ou un ester d'un acide inorganique non volatil choisi parmi l'acide sulfurique, l'acide phosphorique ou l'acide borique.

6. Composition ignifuge selon l'une des revendications précédentes, dans laquelle la composition ignifuge comprend en outre un fournisseur de carbone et/ou un agent gonflant.

7. Composition ignifuge selon la revendication 6, dans laquelle la composition ignifuge contient en outre au moins un stabilisateur de croûte de cendres.

8. Utilisation d'un organopolysiloxane dans des compositions ignifuges à base d'une résine époxy et d'un agent de durcissement comportant une teneur en matière solide de 50 % en poids ou plus pour réduire la viscosité de la composition ignifuge, l'organopolysiloxane étant contenu dans la composition ignifuge en une quantité allant jusqu'à 0,2 % en poids, sur la base du poids de la résine époxy et de l'agent de durcissement.

9. Utilisation d'un organopolysiloxane dans des compositions ignifuges à base d'une résine époxy et d'un agent de durcissement comportant une teneur en matière solide de 50 % en poids ou plus pour améliorer la structure de surface et le brillant de la composition ignifuge durcie, l'organopolysiloxane étant contenu dans la composition ignifuge en une quantité allant jusqu'à 0,2 % en poids, sur la base du poids de la résine époxy et de l'agent de durcissement.
